# EUROPEAN PATENT APPLICATION

(11) **EP 4 287 767 A1**
(43) Date of publication of application: **06.12.2023**
(21) Application number: 23176533.0
(22) Date of filing: 31.05.2023
(51) Int. Cl.: H05B 6/06, F24C 15/20

(54) **INDUCTION COOKTOP WITH COOKING ARTICLE IDENTIFICATION AND TRACKING**

(30) Priority: 31.05.2022 US 202217828523
(71) Applicant: Whirlpool Corporation, Benton Harbor, MI 49022 (US)
(72) Inventor: Boccotti, Alessandro, 21024 Cassinetta di Biandronno (VA) (IT); Caruso, Alessandro, 21024 Cassinetta di Biandronno (VA) (IT); Ceron, Simone Emanuele, 21024 Cassinetta di Biandronno (VA) (IT); Fraccon, Stefania, 21024 Cassinetta di Biandronno (VA) (IT); Gigante, Alessandro, 21024 Cassinetta di Biandronno (VA) (IT); Moroni, Stefano, 21024 Cassinetta di Biandronno (VA) (IT); Nery, Lucas Pereira, 21024 Cassinetta di Biandronno (VA) (IT); Paiva Torres, Caroline Ruella, 21024 Cassinetta di Biandronno (VA) (IT); Iacovino, Massimiliano, 21024 Cassinetta di Biandronno (VA) (IT); Vehslage, David R., 21024 Cassinetta di Biandronno (VA) (IT)
(74) Representative: PGA S.p.A.

(57) **Abstract**

An induction cooktop (10) includes a cooktop surface (12), a plurality of power delivery coils (14) in an array (62) beneath the cooktop surface (12), a cooking article detector (16), a light source (26) directed toward the cooktop surface (12), and a controller (18). The controller (18) receives a signal (20) from the cooking article detector (16) including size and position information for at least one detected cooking article on the cooktop surface (12) and determines that a detected position (22) of the detected cooking article does not correlate with a preferred position (24) of the cooking article with respect to at least one of the plurality of power delivery coils (14). The controller (18) then presents an indication (28), preferably via the light source (26), of the preferred position (24) of the detected cooking article on at least one of the detected cooking article and the cooktop surface (12).

## Description

### BACKGROUND OF THE DISCLOSURE

The present disclosure generally relates to an induction cooktop, and more specifically, to an induction cooktop with control and interface features utilizing size and position information for cooking articles obtained from a detector.

Induction cooktops use one or more power delivery coils to heat compatible cooking articles by inducing eddy currents within the material of the cooking article by inductive coupling therewith. In this manner, induction cooktops lack the natural visual indication of operation of resistive heating electric cooktops or gas cooktops to indicate heating or the proper positioning of a cooking article. In some zoned cooktops, indication of position can be printed or otherwise marked on the cooktop to show at least the location of the cooking zone. In "zoneless" cooktops, however, the use of power delivery coils is adapted by the controller to provide a general match for the location of a cooking article. In either implementation, there is generally no feedback to the consumer about a pot being dislocated from the central position of a fixed or derived cooking zone. Additionally, in determining power delivery coils for use in heating a cooking article, existing solutions simply detect the presence of a cooking vessel using a Boolean true false indication if a pan is placed on or over any one induction element based on an inductive response to a current through the element. This operation does not allow the adjustment of the induction elements based on the portion of the base of the cooking vessel present above an induction element. Additionally, any existing solutions that indicate use generally correspond to the particular coils being used and do not directly correspond to the size or position of the cooking article. The lack of clarity in the user interface causes lower confidence that the user is raising or lowering the temperature of the correct cooking vessel.

### SUMMARY OF THE DISCLOSURE

According to one aspect of the present disclosure, an induction cooktop includes a cooktop surface, a plurality of power delivery coils in an array beneath the cooktop surface, a cooking article detector, a light source directed toward the cooktop surface, and a controller. The controller receives a signal from the cooking article detector including size and position information for at least one detected cooking article on the cooktop surface and determines that a detected position of the detected cooking article does not correlate with a preferred position of the cooking article with respect to at least one of the plurality of power delivery coils. The controller then presents an indication, preferably via the light source, of the preferred position of the detected cooking article on at least one of the detected cooking article and the cooktop surface.

According to another aspect of the present disclosure, an induction cooktop includes a cooktop surface, a plurality of power delivery coils in an array beneath the cooktop surface, a detector operably associated with the cooktop surface, and a controller. The controller receives a signal from the detector including size and position information for at least one detected object on the cooktop surface, determines that the size and position data indicates that the at least one detected object is a first detected cooking article placed on the cooktop surface, and heats the first detected cooking article to a first heating level by inductive coupling with at least a first one of the plurality of power delivery coils corresponding with the position information associated with the first detected cooking article. The controller then continues to receive the signal from the detector, including subsequent size and position information, determines, based at least on the subsequent size information, that the subsequent position information indicates that the first detected cooking article is moved to a new position correlating with the subsequent position information and continues to heat the first detected cooking article at the first heating level by inductive coupling with at least a second one of the plurality of power delivery coils corresponding with the new position information.

According to yet another aspect of the present disclosure, an induction cooktop includes a cooktop surface, a plurality of power delivery coils in an array beneath the cooktop surface, a detector operably associated with the cooktop surface, and a controller. The controller receives a signal from the detector including information associated with at least one detectable characteristic of a first cooking article positioned on the cooktop surface and associates the at least one measureable characteristic of the first cooking article with a first profile associated with the first cooking article stored in a memory accessible by the controller.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a perspective view of an induction cooktop according to an aspect of the disclosure;
FIG. 2 is a schematic overhead view showing derived size and position information for a plurality of detected cooking articles on an induction cooktop in connection with various preferred locations for such cooking articles;
FIG. 3 is a side cross-section view of an induction cooktop showing one implementation of a detector used by the induction cooktop to derive the size and position information;
FIG. 4 is a side view of a variation of an induction cooktop with a detector included in an associated overhead hood that also includes lighting for displaying preferred locations of cooking articles;
FIG. 5 is a depiction of a graphical representation of a cooktop that can be presented to a user via an interface and can be derived using size and position information derived from a detector signal;
FIG. 6 is a side cross-section view of an induction cooktop showing an alternative implementation of a detector used by the induction cooktop to derive the size and position information;
FIG. 7 is a side cross-section view of an induction cooktop showing a further alternative implementation of a detector used by the induction cooktop to derive the size and position information;
FIG. 8 is a top elevation view of an induction cooktop showing a further alternative implementation of a detector used by the induction cooktop to derive the size and position information;
FIG. 9 is a schematic side view of an induction cooktop showing a further alternative implementation of a detector used by the induction cooktop to derive the size and position information;
FIG. 10 is a side cross-section view of an induction cooktop showing a further alternative implementation of a detector used by the induction cooktop to derive the size and position information;
FIG. 11 is a schematic view of the additional use of one or more power delivery coils to detect additional characteristics of a detected cooking article;
FIG. 12 is a cross-section view of an induction cooktop showing an implementation of a structure for indicating the positions of detected cooking articles.
FIG. 13 is a further depiction of a graphical representation of a cooktop that can be presented to a user via an interface and can be derived using size and position information derived from a detector signal;
FIG. 14 is depiction of a subsequent graphical representation of the cooktop in response to tracking of the cooking articles indicating movement of some of the cooking articles to new locations;
FIG. 15 is a further depiction of a graphical representation of a cooktop that can be presented to a user via an interface and can be derived using information regarding detectable characteristics derived from a detector signal to identify profiles associated with the cooking articles; and

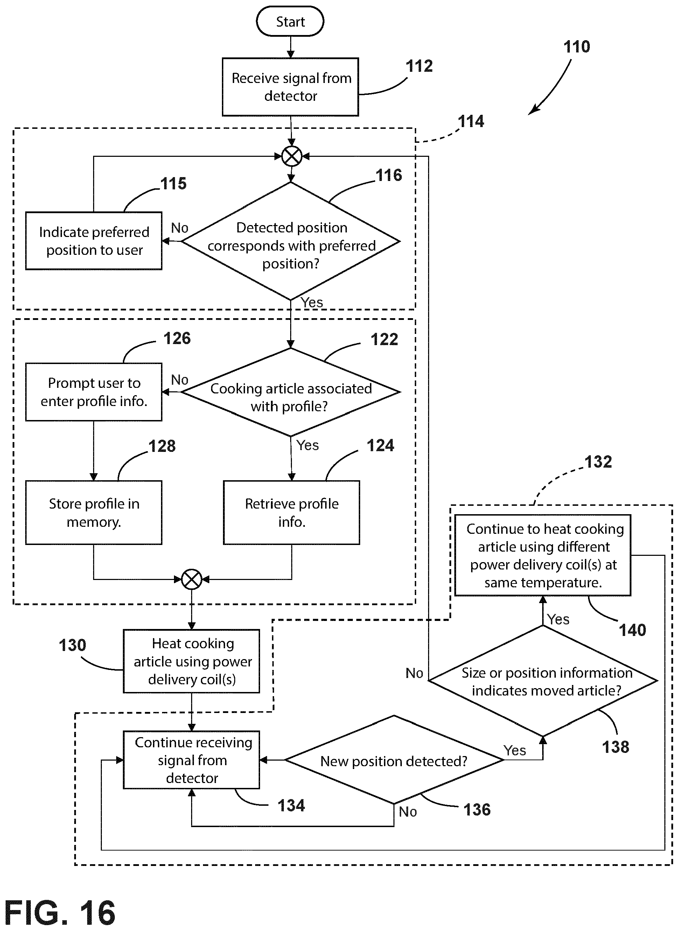

FIG. 16 is a flowchart showing a method for operating an induction cooktop according to additional aspects of the disclosure.

The components in the figures are not necessarily to scale, emphasis instead being placed upon illustrating the principles described herein.

### DETAILED DESCRIPTION

The present illustrated embodiments reside primarily in combinations of method steps and apparatus components related to an induction cooktop. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

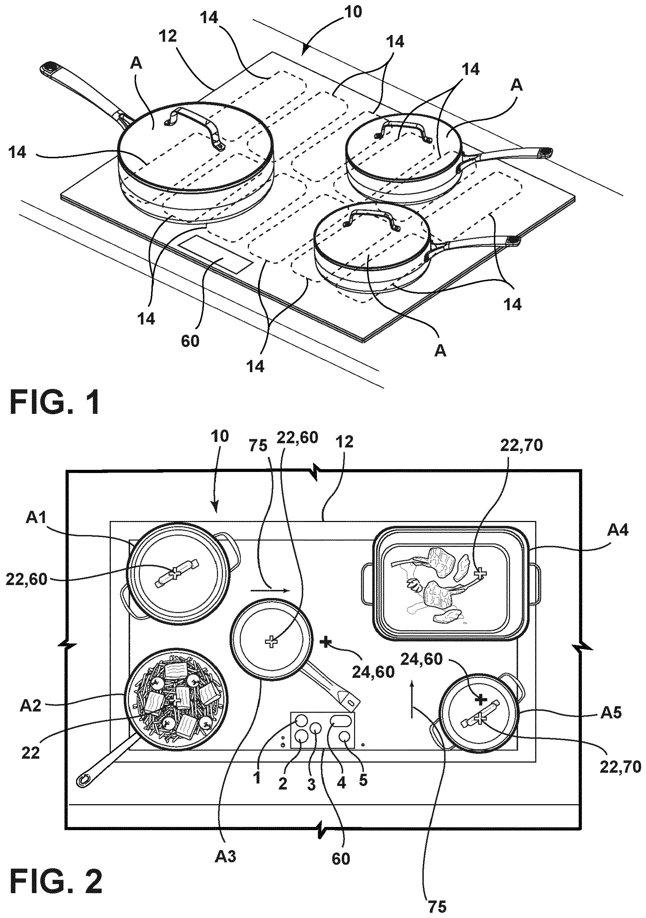

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refertothe surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a ... " does not, without more constraints, preclude the existence of additional identical elements in the process, method, article, or apparatus that comprises the element.

Referring to FIGS. 1-12, reference numeral 10 generally designates an induction cooktop. The induction cooktop 10 includes a cooktop surface 12, a plurality of power delivery coils 14 in an array beneath the cooktop surface 12, a detector 16 operably associated with the cooktop surface 12, and a controller 18. The controller 18 receives a signal 20 from the detector 16 including information associated with at least one detectable characteristic of a cooking article A positioned on the cooktop surface 12 and uses the information in accordance with various features and functions implemented by the controller 18, including various combinations and subcombinations of the features and functions, as discussed further herein. In one aspect, the information in the signal 20 includes size and position information for at least the cooking article A on the cooktop surface 12. Using this information, the controller 18 can implement functionality including determining that a detected position 22 of the detected cooking article A does not correlate with a preferred position 24 of the cooking article A with respect to at least one of the plurality of power delivery coils 14. In connection with this functionality, the cooktop 10 may include a light source 26 directed toward the cooktop surface 12 or may be otherwise in communication with an electronic device (such as a smartphone or the like) programmed or otherwise configured to present information from the cooktop 10. In this manner, the controller 18, when determining that the detected position 22 of the cooking article A does not correlate with the preferred position 24, the controller 18 presents an indication 28, preferably via the light source 26 (or, in some implementations by way of the above-mentioned electronic device, such as a smartphone or other external display), of the preferred position 24 of the cooking article A on at least one of the cooking article A and the cooktop surface 12, depending on the particular positioning and configuration of the light source 26, as well as the size and location of the cooking article A in combination with the distance between the detected position 22 and the preferred position 24.

In general, the signal 20 received from the detector 16 includes information related to contact of any object with the cooktop surface 12 such that the controller 18 is more broadly configured, in one of a number of possible ways, to use the information to detect that an object is present on the cooktop surface 12 and further determine the nature of the object, including that the object is a cooking article A, including a cooking article A capable of induction heating (i.e. with magnetic properties such that electromagnetic induction can be used to create heat within the cooking article A). Accordingly, in a further aspect of functionality realized using the above-mentioned detector 16, the controller 18 receives the signal 20 from the detector 16, including the size and position information, for the at least one detected object on the cooktop surface 12 and determines that at least the size and position data indicates that the at least one detected object is a first detected cooking article A1 placed on the cooktop surface 12. The controller 18 can then heat the first detected cooking article A1 to a first heating level (that may be specified by the user) by inductive coupling with at least one of the plurality of power delivery coils 14 corresponding with the position information associated with the first detected cooking article A1. During such heating of the first detected cooking article A1, the controller 18 continues to receive the signal 20 from the detector 16, which can change depending, for example on cooking articles A being moved by sliding across the cooktop surface 12, by being picked up and replaced on the cooktop surface 12, or by additional cooking articles A being added to the cooktop surface 12. In one such example, the signal 20 may include subsequent size and position information, and the controller 18 can determine, based on at least one of the subsequent size or position information, that the subsequent position information indicates that the first detected cooking article A1 is moved to a new detected position 22 correlating with the subsequent position information and continues to heat the first detected cooking article A1 at the first heating level by inductive coupling with at least a second one of the plurality of power delivery coils 14 corresponding with the new position information. As can be appreciated, this functionality may be generally described as the ability of the controller 18 to use the signal 20 from the detector 16 to track the movement of the first cooking article A1 through various detected positions 22 along the cooktop surface 12 and to maintain reasonably consistent heating of the first cooking article A1 without additional user input or adjustment. In various aspects, described further below, this tracking can use changing position information of a continuous detection to detect dragging of the first cooking article A1 or can use the size information (or other information that can be determined regarding the cooking article A by the detector 16 or other features within the cooktop surface 12) to determine that the first cooking article A1 has been picked up and replaced on the cooktop surface 12 in a different location.

In yet another aspect, the signal 20 received from the detector 16 may be broadly described as at least one "detectable characteristic" of an object and/or specifically of a cooking article A (depending on the particular characteristic) placed on the cooktop surface 12. In this respect, the detectable characteristic may include the above-described size and position information as well as additional information, discussed further below, depending on the type and configuration of the detector 16. In this respect, the controller 18 receives the signal 20 from the detector 16, including the information associated with at least one detectable characteristic of the cooking article A positioned on the cooktop surface 12 and associates the at least one measureable characteristic of the cooking article A with a corresponding profile 30 associated with the cooking article A and stored in a memory 32 accessible by the controller 18. These aspects of the operation of the disclosed induction cooktop 10, including additional functionality and combinations of functions, are further described herein. As can be appreciated, depending on the particular configuration of the induction cooktop 10, as well as the particular detector 16 used, the above functions and aspects of the induction cooktop 10 operation can all be implemented in a single induction cooktop 10 and carried out by the same controller 18 or different dedicated controllers 18. Additionally, only one or various combinations of two of the above functions can be implemented in an appropriately configured induction cooktop 10.

By incorporating the detector 16 described herein, the present controller 18 is configured to utilize an additional layer of information over those of controllers in prior induction cooktops. In other respects the present controller 18 can include the functionality for general control of the induction cooktop 10 according to various known configurations including the execution of various particular calibration processes and the control of the power delivery coils 14 to heat cooking articles A to the desired temperature. For induction cooktops 10 included in ranges or other cooking appliances with different functionality, the controller 18 may also be configured to operate those additional functions. As with prior controllers, the present controller 18 can be a microprocessor executing routines stored in the memory 32. In further implementations, the controller 18 can be an application-specific integrated circuit ("ASIC"), system-on-chip, or other known devices and architectures. Notably, prior controllers may generally rely on the power delivery coils 14 for detection of cooking articles by measuring the inductance or resistance of the power delivery coils 14 in response to a particular frequency or range of frequencies to determine if such measurements indicate inductive coupling of one or more of the power delivery coils 14 with an object capable of inductive heating. This type of measurement provides very rough location data and is limited with respect to any other information available, particularly the size and shape of such objects. By having access to additional information regarding object pot location on the cooktop surface 12, the present cooktop 10 provides a number of additional benefits, including potentially Increased heating performance realized by higher power transfer from coil 14 to the cooking article A by facilitating improved cooking article A location on the cooktop surface 12. Additionally, the controller 18 can determine when a cooking article A is moved away from the improved location and can provide an appropriate indication to the user. The controller 18 can, further, determine when a cooking article A is moved to another location along the cooktop surface 12, including over a different power delivery coil 14 (or plurality of such coils 14) and can automatically update its settings to maintain the same heating level of the cooking article A in the new location. The controller 18 can also determine when an object is not a cooking article A and can provide an indication to the consumer and/or can prevent use of the power delivery coils 14 in the area of the non-cooking object to prevent damage thereto. The additional cooking article A information can also provide for capability in offering additional pre-set cooking parameters (power/heat level, duration), based on an identification of a specific cooking article A, including based on user settings for the particular cooking article A and/or an analysis of the prior use of the same cooking article A.

In one aspect, the additional information is realized by incorporating "multi-touch" technology into the cooktop surface 12 as the above-mentioned detector 16. As can be appreciated, the various implementations of multi-touch technology can provide for the detection of multiple contact points over at least the useable area of the cooktop surface 12. These contact points can be clustered over a generally contiguous area, indicating a single object of a size corresponding to the contiguous contact point area, and/or in separate areas, indicating multiple objects. As can be appreciated, certain multi-touch systems are realized in connection with display screens in various implementations for the detection of user-interaction, typically by fingertip or stylus, with the screen. While some such systems are limited to use with a dielectric material and may be, accordingly, incompatible with conductive cooking articles, certain forms of multi-touch technology can be adapted for use with induction cooktops, such as the induction cooktop 10 described herein. Various examples of such multi-touch technologies include resistive and capacitive circuitry. In particular, the cooktop surface 12, which is typically composed of a glass-ceramic material, may be configured with additional layers, either above or below the main substrate, consisting of resistive or capacitive touch circuitry. As can be appreciated, resistive touch arrangements are pressure-based and consist of two conductive layers, separated by spacers. The pressure at one conductive layer, creates contact between the two layers, causing current to flow through the circuitry at the location of contact. Using known readout circuitry, such an arrangement can allow the controller 18 to map the position of an object on top of a cooktop surface 12. Capacitive touch systems use capacitive mesh, added to the cooktop surface 12, to detect touch points through a change in the capacitance within the mesh, which facilitates mapping of the location(s) of contact.

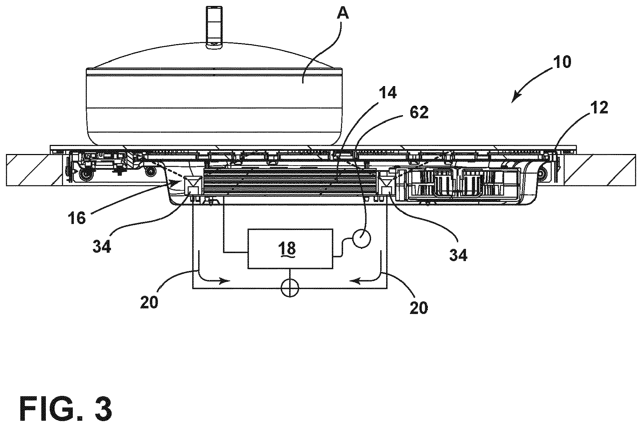

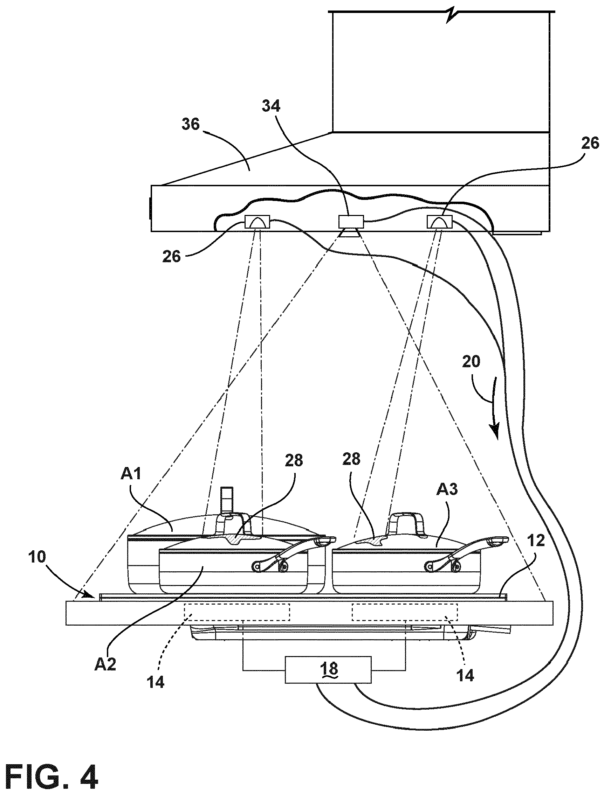

In other examples, various optical systems can be incorporated into the cooktop 10. In one aspect, the multi-touch detector 16 can include a camera 34 directed toward the cooktop surface 12 that can transmit the detection signal 20 in the form of image data to the controller 18. The controller 18 can receive the signal 20 and can extract the size and position information for the at least one detected cooking article A on the cooktop surface 12 by various methods, depending on the particular configuration of the optical system. In one aspect, the optical system can be one of various camera-based systems that incorporate one or more cameras 34 either above the cooktop surface 12, such as in a corresponding range hood 36 (FIG. 4), or below the cooktop surface 12 and directed upward (FIG. 3). In the arrangement shown in FIG. 3, in which one or more cameras 34 are positioned beneath the cooktop surface 12, such as within an internal housing 42 of the induction cooktop 10, the induction cooktop 10 can further include one or more light sources 44 positioned beneath the cooktop surface 12 to illuminate the undersides of any objects positioned on the cooktop surface 12 for detection using the camera(s) 34. A plurality of cameras 34 and light sources 44 can be used to provide a complete view of the underside of cooktop surface 12, given a limited field of view 45 of the individual cameras 34 when positioned in proximity to the underside of the cooktop surface 12 and to position the cameras 34 within any open spaces between other components of the induction cooktop 10, such as the power delivery coils 14 and the like. Various optical techniques can be used to detect objects, including cooking articles A within the image data in the signal 20 from the camera-based detector 16 of FIG. 3 including, but not limited to, rear diffused illumination ("RDI") and front diffused illumination ("FDI"). These techniques allow the use of a specifically configured image processing routine to extract from the image data the size and position information for the at least one detected cooking article A on the cooktop surface 12 based on an identification of contact between the detected cooking article A and the cooktop surface 12. In this manner, the boundary of a contact patch can generally correspond with the size of the cooking article A. In connection with such techniques, the light sources 44 can be infrared light sources and the camera(s) 34 can be configured to capture infrared light for transmission of the image data such that the light emitted by the light sources 44 is not visible to users.

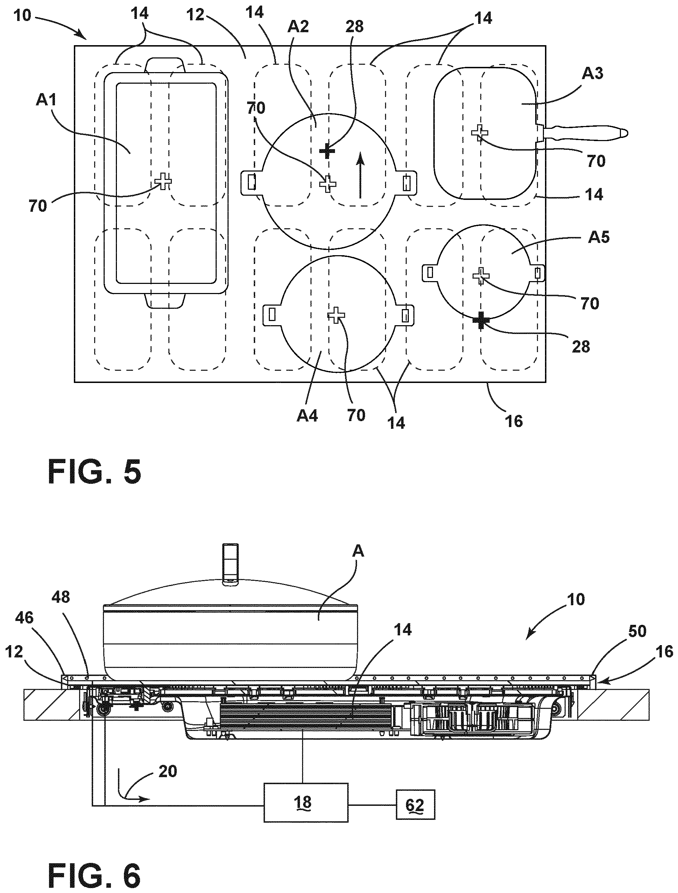

With respect to the external camera 34 system of FIG. 4, the camera 34 can be a video camera capturing a continuous image using the visible light spectrum. The controller 18 extracts the size and position data by applying an image processing routine, which may be stored in the memory 32 associated with or otherwise accessible by the controller 18, to the image data. As can be appreciated, various types of image processing can be used to detect objects, including but not limited to cooking articles A on the cooktop surface 12. Examples of such image processing routines for object recognition include object localization (including edge detection), image classification, object detection, and can be implemented using various machine learning techniques, including convolutional neural networks ("CNNs", region-based CNNs ("R-CNNs"), or the like), with other examples and particular implementations being possible. In this manner, the controller 18 can determine the size and positions of a number of objects on the cooktop surface 12 simultaneously and can classify the detected objects to provide additional information to the useable controller 18, as discussed further below. These detected and classified objects can be used to derive a map 41 (FIG. 5) of the cooktop surface 12 including any cooking articles A positioned thereon, along with the size and classification of the cooking articles A.

Turning to FIG. 6, a variation of the optical detector 16 is shown in which an LED light frame 46 is positioned around an outer perimeter of the cooktop surface 12. In particular, the LED light frame 46 includes a plurality of light sources 48 in the form of light emitting diodes ("LEDs") on one side of the frame 46 directed over the top of the cooktop surface 12 and light sensors 50 on the opposite side, which creates an optical grid across the cooktop surface 12. In one variation, the light sources 48 can extend along two adjacent sides (e.g. left and front) of the cooktop surface 12, and the light sensors 50 can be positioned on the two respectively-opposite sides (e.g. right and back). The light sources 48 can be configured to emit infrared light such that it is not visible to the user. In any such variation, when an object is placed on the cooktop surface 12, some of the invisible light beams are interrupted by the object, which causes a drop in the signal 20 received by the controller 18 from the light sensors 50. The controller 18 can be configured to process the signal 20 to determine the location of the drop in the signal 20 and to interpret the location, including its size, along both axes of the frame 46 as the size and position data of a detected cooking article A. In a variation, the light sources 48 in an optical detector frame 46 can be infrared laser light sources arranged around the perimeter of the frame 46 in an alternating manner with the light sensors 50 such that the light sensors 50 can detect reflected laser light from the light sources 48. In this manner, the controller 18 can operate the light sources 48 to emit timed pulses of laser light and to measure the time-of-flight of any detected reflected pulses to determine the distance from the frame 46 to determine the size and position data in one axis with the locations of the detections providing the size and position data in the other direction. In these and other optical systems that do not use a camera 34 to provide visual information regarding detected objects, the size and position data can be analyzed to determine a general shape of the object (by the relative positions of the detection points generated by the object), such that the controller 18 can use the shape information to determine that the shape corresponds with that of a certain type of cooking article A to at least initially confirm that the detected object is a detected cooking article A.

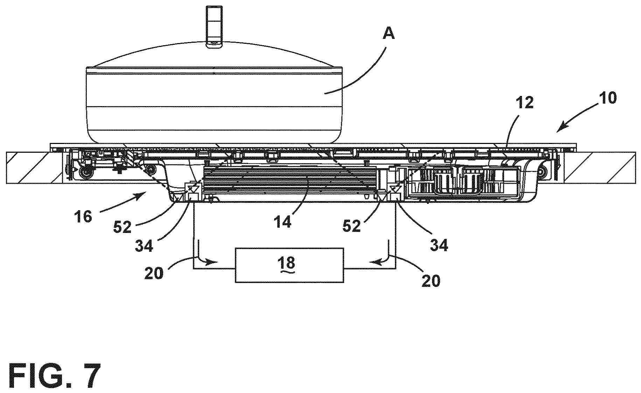

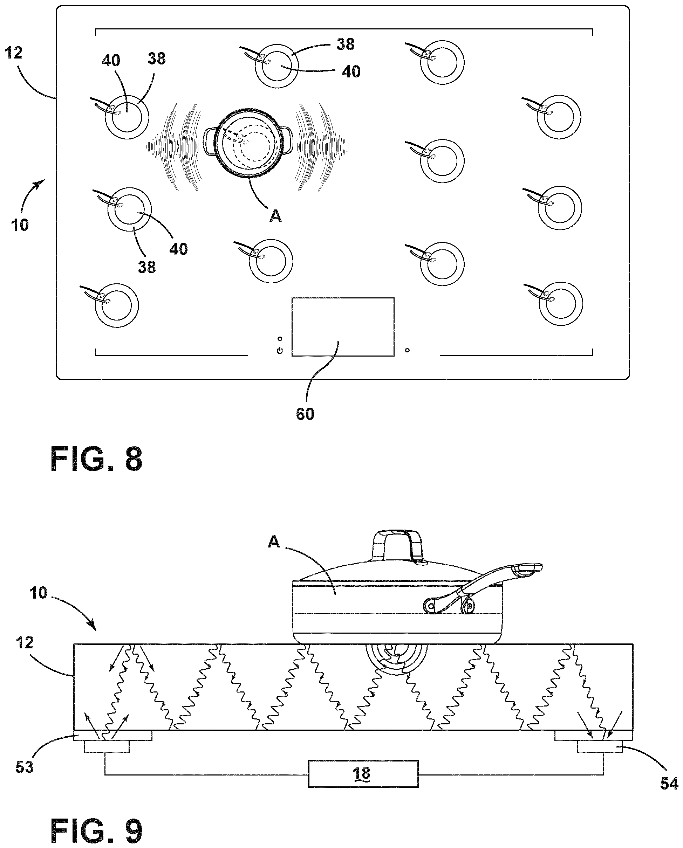

Turning to FIG. 7, in a further variation of an optical detector 16 with one or more cameras 34 positioned below the cooktop surface 12 is configured as an optical infrared detection system that includes wide-angle infrared projectors 52 positioned within the housing 42 with cameras 34 configured to detect infrared light reflected back from the projectors 52, such as by an object positioned on the cooktop surface 12 in a rear-diffused illumination system. The projectors 52 can be arranged adjacent the cameras 34 in a similar manner to the arrangement of FIG. 3, discussed above. In a further variation shown in FIG. 9, the detector 16 can be an optical system that uses frustrated total internal reflection ("FTIR") to capture the size and position information. In particular, a plurality of infrared light sources 48 to detect and measure the internally-reflected light that reaches the other side of the cooktop surface 12. In this manner, if an object is placed on the cooktop surface 12, the internal reflection will be frustrated such that the amount and particular location of reflected light is altered. By detecting the locations of such alteration in two axes, the size and position of objects can be detected. In a similar implementation, a diffuser layer 56 can be added to the interior side of the cooktop surface 12 such that the internally reflected light is diffused at the point of contact between an object and the outer side of the cooktop surface 12. In this manner, an infrared camera can be used to detect such diffusion and to directly determine the size and position of an object based on the diffused light image from the camera (in place of sensors 54) according to diffused surface illumination.

In another example, shown in FIG. 8, acoustic sensors can be used for the detector 16. Specifically, series of piezoelectric transducers 38 and receivers 40 can be arranged beneath the cooktop surface 12 with the transducers 38 creating a grid of ultrasonic waves originating from the cooktop surface 12. When an object contacts the cooktop surface 12, the cooktop surface 12 absorbs part of the wave that is produced by the transducers 38, with the receivers 40 detecting the resulting gradient in the ultrasonic grid in a manner that can be processed by the controller 18 to determine the size and position information embedded in the collective signals from the receivers 40. In particular, the controller 18 may derive the size and position information for an object on the cooktop surface 12 based on a time differential of a sound event among at least three of the plurality of acoustic receivers 40 and identified in the signal 20. In particular, the plurality of acoustic receivers 40 are positioned at known locations along/beneath the cooktop surface 12. The receivers 40 can output a signal reflecting the acoustic profile of an object on the cooktop surface 12 that can be simultaneously analyzed to determine the distance of the object from each of the receivers 40 and, accordingly, the position of the object on the cooktop surface 12. The acoustic profile information can also be analyzed to confirm that the object is a detected cooking article A based on the various properties of known cooking articles.

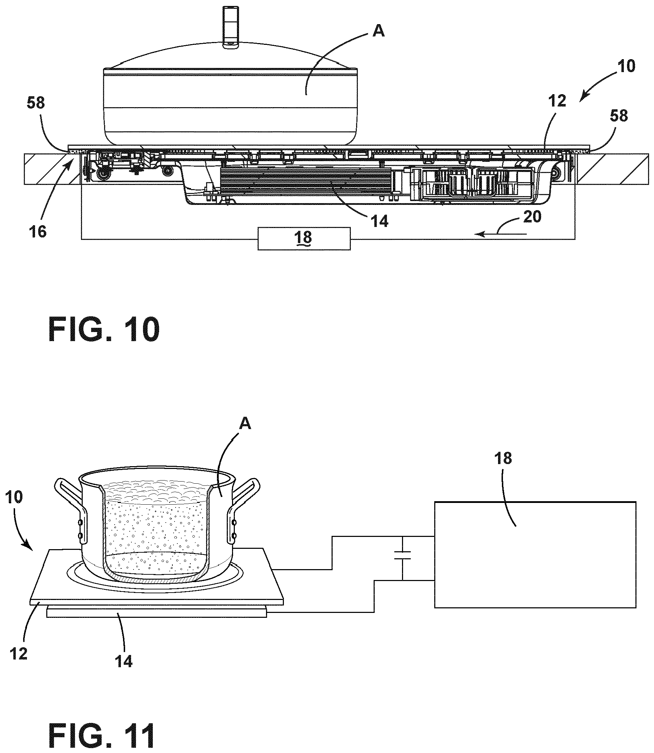

In yet a further variation, shown in FIG. 10, the cooking article detector 16 may comprise a plurality of load cells 58 supporting at last respective corners 60 of the cooktop surface 12. The signal 20 can, therefore include the load data from the load cells 58, which can be used by the controller 18 to derive the size and position information for the at least one object placed on the cooktop surface 12 based on a distribution of a load change on the cooktop surface 12 identified in the signal 20. The total change in load can also be used to determine the weight of any object placed on the cooktop surface 12, which can be used to determine if the object is heavy enough to be a cooking article A at least in an initial determination that the object is a detected cooking article A.

In these and other optical systems that do not use a camera, for example, the controller 18 may leverage additional system functionality to determine if an object detected on the cooktop surface 12 is a detected cooking article A. As shown in FIG. 11, the controller 18 may additionally leverage the power delivery coils 14 by measuring an inductance thereof. In this respect, the inductance measured over any coils 14 will change when coupled with a cooking article A capable of inductive heating. The controller 18 can use this information, along with that of the detector 16 to confirm an initial indication that an object is a detected cooking article A. As can also be appreciated, the use of the above-described multi-touch technology, in all of the variations discussed herein, can facilitate the detection of multiple objects, including multiple cooking articles A, as shown in the examples of FIGS. 1 and 5.

In connection with any of the above systems for determining the position of a detected cooking article A, as well as, potentially with other reliable systems for determining a location of a cooking article A on the cooktop surface 12, in a further aspect of the disclosure, the induction cooktop 10 can offer guidance as to an optimized or improved position for the cooking article A. In one aspect, the controller 18, upon receiving the signal 20 from the cooking article detector 16, in any of the particular aspects discussed above, including the above-described size and position information, for at least one detected cooking article A on the cooktop surface 12. The controller 18 is configured to determine whether the position information, from which a detected position of the detected cooking article A can be derived, correlates with a preferred position of the cooking article A. In one aspect, as discussed further below, the determination or prior knowledge of the preferred cooking article position can be determined with respect to at least one of the plurality of power delivery coils 14, particularly one underlying the detected cooking article A to inductively couple therewith. In particular, if the controller 18 determines that the detected cooking article position does not correspond with the preferred cooking article position, the controller 18 can present guidance for the user to reposition the cooking article A into the preferred position 24. In one implementation, shown in one aspect of FIGS. 2 and 4, the cooktop 10 includes a light source 58 directed toward the cooktop surface 12. The controller 18 uses the light source 58 to present an indication, via the light source, of the preferred position 22 of the detected cooking article A on at least one of the detected cooking article A and the cooktop surface 12. In another aspect, the controller 18 can present the indication of the preferred position 24 for the cooking article A on a human-machine interface ("HMI") 60 included on the induction cooktop 10, as shown in FIG. 2.

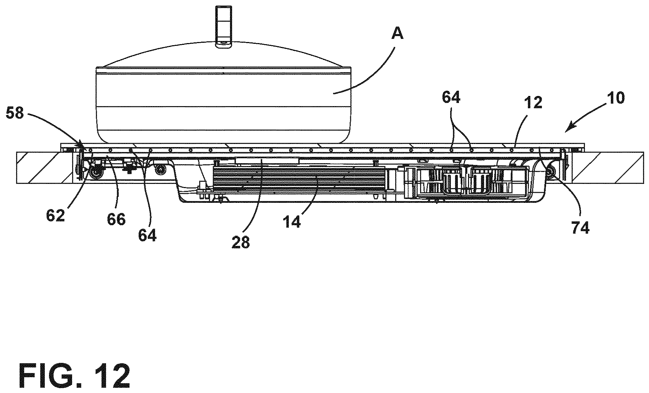

In one implementation, the light source 58 can be an array 62 of light elements 64 positioned beneath the cooktop surface 12. In one example, shown in FIG. 12, the light elements 64 can be LEDs supported on a sheet 66 of glass, or transparent plastic, between the power delivery coils 14 and the cooktop surface 12 in an array dense enough to present visible indications, including an indication 68 of a preferred position 24 of at least one of the detected cooking articles A through the cooktop surface 12 to be visualized by the user. In various implementations, the preferred position indications 68 can be relatively small (e.g., 2-5 cm) "X" or "+" marks at the desired center of the preferred position 24 of the cooking article A in a manner similar to the depiction of FIG 2, which is based on the use of an HMI 60 to graphically represent such indications 68. In this respect, the controller 18 may present the indication 68 of the preferred position 24 of the detected cooking article A on an underside 74 of the cooktop surface 12 so as to be visible through the cooktop surface 12 by illuminating selected ones of the light elements 62 that correlate with the desired shape of the indication 68 within the preferred position 24 of the detected cooking article A. In addition, the controller 18 can present an indication 70 of the detected position 22 of the cooking article A in various forms. Because the arrangement of FIG. 12 is such that the cooking article would cover a mark similar to that depicted for the preferred position indication 68, the present arrangement may present an outline of the detected cooking article A, developed, for example, using the detected size and shape information from the detector 16, as the detected position indication 70, although other shapes may be used. Additionally, the outline may not appear as a solid line, but rather as separate elements approximating the outline, depending on the resolution of the array 62. Even further, a directional indication 75 can be given that indicates the direction of movement from the detected position 22 to the preferred position 24 of the cooking article A to help the user locate the preferred position indication 68 and/or to help the user determine which one of multiple preferred position indications 68 corresponds with of a number of detected cooking articles A1, A2, A3, etc., as shown in FIG. 2, for example. As an alternative, the indication 60 of the preferred position 24 and the indication 70 of the detected position 22 (or, more broadly, the areas of cooktop surface 12 corresponding with the detected position 22 and the preferred position 24) can alternately pulse or flash, or can change intensity in opposite directions (lowering and rising, respectively), to indicate the desired movement direction. In such an example, once the cooking article A has been moved to the desired position 22 the indication 60 can pulse (e.g. for about 10 seconds) before turning on at relatively higher intensity. After about 30 seconds the indication 70 of the detected position (which no longer includes the cooking article A) turns into the off mode or exhibits a reduced intensity (including while potentially blinking or flashing) while the cooktop surface 12 in that area remains warm (if applicable). Once that area cools to below a predetermined temperature, the indication 70 may turn off.

Returning to FIG. 4, the light source can be a projector 76 positioned above the cooktop surface 12 and directed toward an outside 78 of the cooktop surface 12. In this implementation, the controller 18 can present the indication 68 of the preferred position 24 of the detected cooking article A on at least one of the detected cooking article A and the cooktop surface 12 (depending on the distance between the detected position 22 and the preferred position 24, as well as the size and shape of the cooking article A) by projecting an image of the indication 68 within the preferred position 24 of the detected cooking article A. As shown, the indication 68 may be projected on the cooking article A or may overlap between the cooking article A and an adjacent portion of the cooktop surface 12, when the preferred position 24 is all or partially within a footprint of the cooking article A. Alternatively, the indication 68 may be fully on the cooktop surface 12 when the preferred position 24 is spaced from the cooking article A in its detected position. The projector 76 can also project indications 70 of the detected positions 22 onto the cooking articles A in the form of additional "X" or "+" marks and/or can outline the detected cooking articles A, as discussed above, as well as the directional indications 75 discussed above. In various aspects, the different indications 68, 70, and 75 can be in different colors. These types of indications 68, 70, and 75 can also be presented to the user as an overlay on a graphical representation of the cooking articles A1, A2, A3, A4, and A5, for example that may be captured from a camera 34 or may be generated using at least the size and position information from the detector 16. This composite image may be presented to the user via the HMI 60 shown in FIGS. 1 and 2 or presented, in a similar manner, on the screen of an electronic device, such as a smartphone, tablet, or the like communicatively connected to the cooktop 10 via Bluetooth, a wireless LAN, or the like.

In either of the implementations of FIGS. 2, 4, and 12, the system provides user guidance regarding a recommendation on adjustment of the cooking article A to an improved or optimized location (i.e., the preferred position 24) for inductive coupling with one or more power delivery coils 14. In one aspect the controller 18 can associate the detected position 22 of a cooking article A with a known (e.g., pre-programmed in the memory 32) preferred position 24 associated with the closest power delivery coil 14 and/or the center of a dedicated cooking zone associated with one or more power delivery coils 14, depending on the particular configuration of the induction cooktop 10. The controller 18 can use this information to determine if movement of the cooking article A is desired (such as by the detected position 22 being outside of a tolerance range of the preferred position 24). Additionally or alternatively, the controller 18 can use calibration data to determine if movement is needed or can calculate the preferred position over multiple power delivery coils 14 in, for example, a zoneless arrangement, using the size and position data from the detector 16.

Additionally, in an induction cooktop 10 that does not have specified cooking regions, a calibration process is implemented to determine the appropriate heating parameters for a cooking article A by one or more power delivery coils 14. In one aspect, there may be a reduction in the level of power transfer between the power delivery coils 14 and the associated cooking articles A, if the location of the cooking article A is not known or is only generally determined based on coupling with one or more power delivery coils 14, as the calibration may not be executed correctly. Accordingly, the use of one of the above-described detectors 16 to derive the detected locations 22 of the cooking articles A on the cooktop surface 12 can improve calibration and operation. Additionally, by providing the above guidance in repositioning the cooking article(s) A during, or as an initial part of, the calibration step, the results of the calibration can be improved. In this manner, the repositioning guidance can improve the power delivery in two phases of the operation of the induction cooktop. In an additional aspect, the controller 18 may leverage the calibration process to determine that the detected position 22 of the cooking article A does not correlate with the preferred position 24 of the cooking article A. In particular, during the calibration process, if the inductance of at least one of the plurality of power delivery coils 14 associated with a detected cooking article A is below a predetermined threshold and may determine the preferred position 24 of the cooking article A, the controller 18 can determine that the position of the cooking article A is not optimized and can use the calibration information, along with the size and position information to derive the preferred position 24 to increase the inductance of the at least one power delivery coil 14 to above the predetermined threshold.

In a further aspect, the controller 18, in any of the positioning schemes described above, may further determine that the detected position 22 of any of the detected cooking articles A correlates with the preferred position 24 of the cooking article A (e.g., within a predetermined tolerance) and may present a confirmation notification, via the light source, on the at least one of the detected cooking article A and the cooktop surface 12, depending on the scheme, as discussed above. In one aspect, this may include presenting the indication of the detected position 70 of the cooking article A in red when the detected position 22 does not correlate with the preferred position 24, and presenting it in green when it does. In further variations, different shapes or markings can be used for each case. In one such example, the indication of the preferred position 24 may smoothly pulse on and off (or between lit and dimmed states), or may more abruptly blink or flash on and off, to draw attention to the preferred position 24, when different from the detected position 22. Additional behavioral aspects of the indications 60 and 70 can be used for additional status communication. For example, the indication 60 of the preferred position 24 can pulse when the corresponding coils are turned on to indicate that the cooking article A is being detected and can turn to solid when the detection is complete (including in connection with the other behavioral characteristics discussed above). If the cooktop 10 is inactive for a predetermined time interval (e.g., 10 seconds), all indications 60, 70, 75, can be turned off.

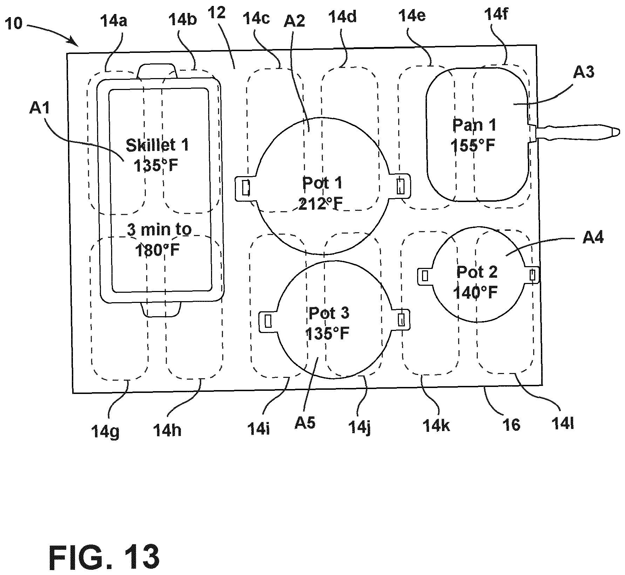

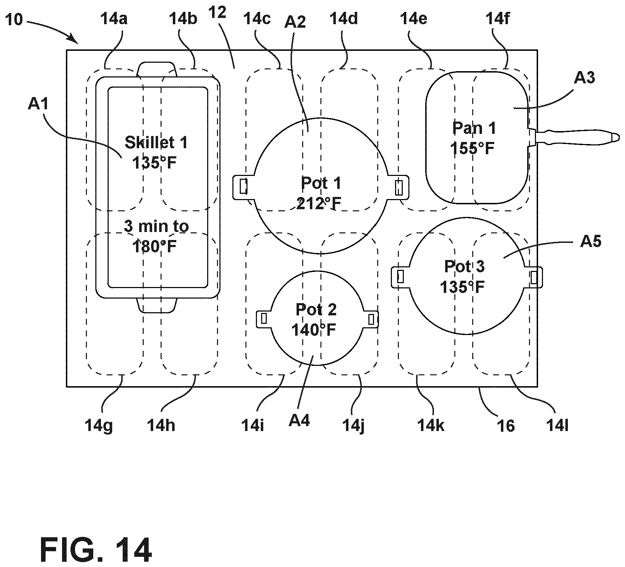

In a further aspect, the controller 18 may continue receiving the signal 20 from the cooking article detector 16 during use of the induction cooktop 10. During such continued detection, the controller 18 may determine that the subsequent position information in the signal 20 indicates that at least one of any detected cooking articles A (cooking article A5 in the example of FIG. 13) is moved to a new position, as discussed further below with respect to FIG. 13. In various aspects, the detection of a moved cooking article A5' can be based on the size information for the detected cooking article being the same (within a predetermined tolerance) as the one removed from the cooktop surface 12. Additionally, the continued receipt of the signal 20 from the detector may indicate a moving contact patch indicating that a detected cooking article A5 was dragged or slid across the cooktop surface 12. In any such implementation, the controller 18 may further present an indication 70', via the light source, of the new detected position 22' of the cooking article A5'. In connection with such detection, the controller 18 may further determine that the new detected position 22' of the detected cooking article A5' does not correlate with a new preferred position 24' of the cooking article A5' with respect to another of the plurality of power delivery coils 14 and may present another indication 68', via the light source, of the new preferred position 24' of the detected cooking article A5' on at least one of the detected cooking article A5' and the cooktop surface 12 in a similar manner to the discussion above. In a still further aspect, discussed further below with respect to FIG. 14, the controller, based at least on the size information for at least one of the detected cooking articles A on the cooktop surface 12, may identify the detected cooking article A as a cooking article A that has a profile, including various information thereof, stored in the memory 62. As discussed further below, the profile 78 can include at least one cooking parameter of the profiled cooking article A stored in the memory 62 accessible by the controller 18.

Referring in greater detail to the depiction in FIG. 13, in addition or as an alternative to the above discussion regarding the positioning guidance functionality of the disclosed induction cooktop 10, the controller 18, upon receiving the signal 20 from the detector 16, including size and position information for at least one detected object on the cooktop surface 12, can be configured to determine that the size and position data indicates that the at least one detected object is a first detected cooking article A1, for example, placed on the cooktop surface 12. In response to this detection and an appropriate user input indicating that the user wishes to heat the detected cooking article A1 using the induction cooktop 10, the controller 18 can heat the first detected cooking article A1 to a first heating level by inductive coupling with at least a first one of the plurality of power delivery coils 14_{I} that is determined to correspond with the position information associated with the first detected cooking article A1. In one respect, this can be one of the power delivery coils 14_{I} that the detected cooking article A1 directly overlies, although other instances are to be understood. As discussed above, the controller 18 can continue to receive the signal 20 from the detector 16 during such operation of the induction cooktop 10, including in the identification and heating of additional cooking articles A (e.g. cooking articles A2, A3, A4, and A5) that are added to the cooktop surface 12. This continued detection may also be used to determine, including based on the subsequent size and position information realized in the continued signal 20, that one of the cooking articles A1 has been moved (including by being picked up and replaced or by being dragged across cooktop surface 12), as shown in FIG 14. In one aspect, this determination can be based at least on the subsequent size information being the same (within a tolerance) as the size information from the detected cooking article A1 in the original detected position 22. The new position information can be associated with a new detected location 22' of the cooking article A1', and the controller 18 can continue to heat the first detected cooking article A1' at the heating level originally selected by the user by inductive coupling with at another one of the plurality of power delivery coils 14h corresponding with the new detected position 22'.

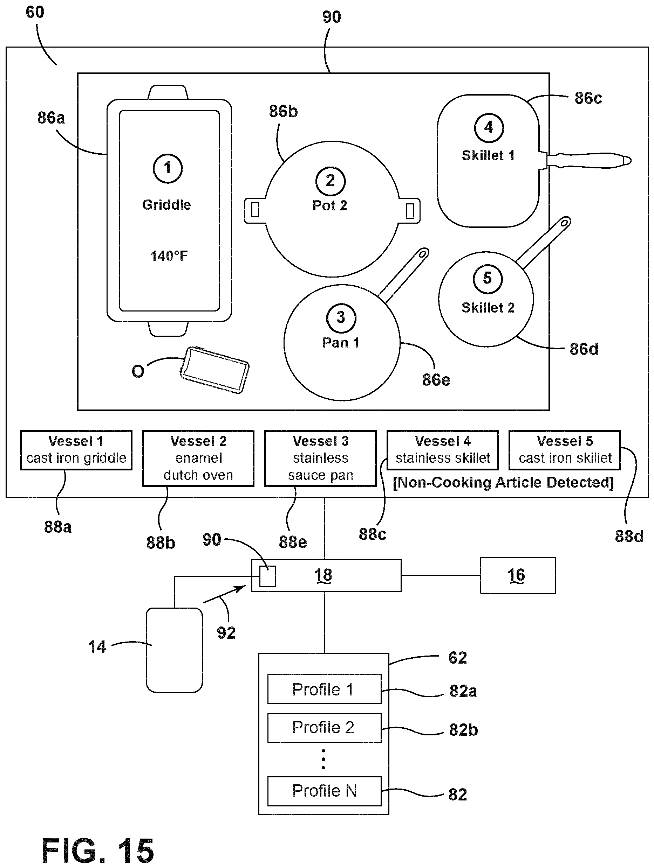

As discussed above, during operation and by continued receipt of the signal 20 from the detector 16, the controller 18 may further determine that a second detected cooking article A2, for example, has been placed on the cooktop surface 12, as shown in FIG. 13. The controller 18, at the direction of the user, may heat the second detected cooking article A2 to its selected heating level by inductive coupling with others of the plurality of power delivery coils (14c and 14d, for example) corresponding with the detected position 22 associated with the second detected cooking article A2. In a similar, manner, the controller 18 may also use the continued signal 20 information to detect that the second cooking article A2 has also been moved to a new location and can continue to heat the second detected cooking article A2' (FIG. 14) at the heating level originally selected by the user by inductive coupling with at another one of the plurality of power delivery coils 14I corresponding with the new detected position 22' of the second detected cooking article A2. In further aspects, the controller 18 may be configured to use the size and position data to determine that at least one detected object is not a cooking article A and may, accordingly determine that the object is a non-cooking object O (such as another kitchen utensil or appliance, a cell phone, etc.), as shown in FIG. 15, and discussed further below. In such an instance, the controller 18 may, accordingly, alert the user that the at least one detected object is a non-cooking object O, such as by HMI 60, and may, optionally, block the user of any underlying power delivery coils 14 to prevent heating or other damage to such a non-cooking object O.

In a still further aspect, discussed further below with respect to FIG. 15, the controller, may identify either of the detected cooking articles A1 or A2 as a profiled cooking article A discussed further below, the at least one cooking parameter of the first profiled cooking article can include at least one of a cooking article size, a cooking article shape, a cooking article type, an induction heating calibration profile, a cooking article material composition, a thermal absorption profile, and an acoustic profile. In this manner, the controller 18, in continuing to heat the first detected cooking article A1 at the first heating level by inductive coupling with at least one underlying power delivery coil 14I by deriving a driving signal for the power delivery coil 141 using the at least one cooking parameter of the first profiled cooking article. Additional aspects of the development and use of cooking article profiles by the controller 18 are discussed further below. Additionally, the movement detection discussed herein with respect to FIGS. 13 and 14 can be used with the positioning guidance discussed above with respect to FIGS. 1, 4, and 10.

Turning to the example of FIG. 15 in greater detail, in an additional aspect of the disclosure, the above-described signal 20 from the detector 16, according to the various aspects and implementations discussed above, may be further described as containing information including at least one "detectable characteristic" of any detected cooking articles A positioned on the cooktop surface 12. In general, the size information described above and provided by all of the various implementations of the detector 16 is one such detectable characteristic, as is any shape information that can be derived from the signal 20 by the controller 18 using the contact point location data from which the size information is generally derived. In addition, the measureable characteristics included in and derived from the signal 20 by the various detectors 16 can include the image data received from the video camera 34 discussed above with respect to FIG. 4, from which a detectable characteristic in the form of one or more aspects of the appearance of the cooking article A can be derived. Further, the detector 16 in the form of or including the acoustic receivers 40 discussed above with respect to FIG. 8, can provide information regarding a measureable characteristic in the form of the acoustic profile of the cooking article A in response to the ultrasonic signal provided by the transducers 38. Other detectable characteristic information may also be derived from the other detector types 16 discussed above. In any such aspect, the controller 18 can be configured to associates the at least one measureable characteristic of a detected cooking article A with a cooking article profile 82 stored in a memory accessible by the controller 18.

This aspect of the disclosed induction cooktop 10 provides a user interface, implemented by the above-described HMI 60 in one implementation that identifies cooking articles A by at least their approximate shape and associates the shape with a unique identifier. This, in at least one aspect, allows controller 18 to facilitate the selection of the cooking article A for control by the user by way of the HMI 60 in a way that can be readily understood by the user, including in connection with zoneless induction cooktops 10. This improved clarity in selection of the cooking vessel helps improve the accuracy with which an intended temperature change or other control implemented by the user is implemented in the intended cooking article A. As shown in FIG. 15, the controller 18 can present temperature information 84 in connection with a derived identification image 86 of the cooking article A that corresponds with the detected and known shape associated with the cooking article profile 82. Additional information can include selected temperature, current temperature, as well as estimated time to reach the selected temperature in an optional manner depending on the specific implementation of the induction cooktop 10. In various aspects, the HMI 60 can include additional identifying information 88, including cooking article type and an assigned number further associated with the profile 82. In certain aspects, permanent soft keys can be associated with the locations in which the additional information 88 is displayed to allow selection of the corresponding cooking article A for control. In other implementations, the HMI 60 can be a touchscreen such that the user can tap on a virtual button including the identifying information 88 and/or the identification image 86 to indicate the cooking article A for control using an additional overlay on the HMI 60 and/or with additional physical buttons associated with the induction cooktop 10.

In addition to the identifying information 88, including type, name, etc., and identifying representation of specific cooking articles A, the profile 82 can also include the heating information associated with the cooking article A, which can enable the controller 18 to derive the additional temperature setpoint timing information discussed above, as well as other information specific to the cooking article A. In one aspect, during the above-described calibration step carried out when placement of a cooking article A on the cooktop surface 12 is detected, as discussed above, the controller 18 can compare the measureable characteristic(s) provided by the detector 16 with the identifying measureable characteristics associated with the profiles 82 stored in memory 62. In this process, if a profile 82a, for example, is associated with one of the detected cooking articles A1, for example, the controller 18 can recall the profile 82a and display the identifying image 86 and/or additional information 88 on the HMI 60, including the placement of the identifying image 86 in an area of the HMI 60 that corresponds with the detected location 22 of the cooking article A1 on the cooktop surface 12. As shown, this can include a graphic representation 90 of the cooktop surface 12 on the HMI 60. If no profile 82 in memory 62 includes a match for the measureable characteristic(s) of the detected cooking article A, the controller 18 can prompt the user to identify the detected cooking article A, for example, with a unique symbol, title, color, etc. for use on the HMI 60 in connection with current and future use of the cooking article A. The profile 82 of the cooking vessel can then contain the calibration settings derived during the calibration process in addition to the user specified identifications 86 and 88. Optionally a generic unique image and description of the cooking article A (e.g. one derived from the size and/or shape information from the signal 20) can be used if the user does not add a unique identification. Other measureable characteristics of the cooking article A can be obtained during the calibration phase from the controller 18 by way of a measurement of the response of the power delivery coils 14 in response to a calibration signal and reflecting the inductive behavior of the coupled coil 14 and cooking article A or by additional sensors, such as temperature sensors associated with the power delivery coils 14 and the like. Such additional measureable characteristics can include heat retention, inductive material composition indicators, acoustic, vibrational, and captured images. Any of these can be used in various combinations to identify the various cooking articles A placed on the cooktop surface 12 and provide the user with the identifying representation 86 or additional information 88 on the HMI 60 for control during cooking.

In the example of FIG. 15, a number of cooking articles A1, A2, A3, A4, and A5 can be detected on the cooktop surface 12 by any of the above-described systems and related processes. In the example, cooking article A4 can be titled "Skillet 1" by the user and can be calibrated by and for use with the cooktop 10. The profile for "Skillet 1" A4 can be identified with a user selected color and/or the title, which can be included in the profile 82d in memory 62 so that when the HMI 60 of the cooking article A4, it can present the name "Skillet 1", as well as the selected or derived identifying representation 86 and/or color selected by the user to distinguish the cooking article A4 from the other cooking articles A1, A2, A3, and A5. In a further aspect, the controller 18 can allow for the identification of both calibrated and non-calibrated cooking articles A. This distinction can be used by the controller 18 to indicate, via HMI 60, that a cooking article A is not calibrated and, thus, not maximizing the assisted cooking features present in the disclosed cooktop 10.

As discussed above, the controller 18 can use the above-described multi-touch detectors 16 to measuring the size of cooking articles A and can additionally, leverage additional components to measure variety of features such as heat retention, material composition, acoustic profile, vibrational profile, visual characteristics, and the like. In this respect, some aspects of the generally-described "detector" 16 can additionally or alternatively be an input included in the controller 18 and operably associated with the cooktop surface 12 by receiving the return signal 92 from at least one of the plurality of power delivery coils 14 when coupled with one of the detected cooking articles A through the cooktop surface 12 and driven by the controller 18 according to a calibration signal. The return signal 92 can, accordingly, include information including one or more detectable characteristics of the detected cooking article A, including at least one of the induction heating calibration profile, material composition, and thermal absorption profile of the cooking article A. As discussed above, any or all of these detected characteristics can be stored in the existing or new profile 82 associated with the cooking article A.

As discussed above, the controller 18 can prompt the user, via the HMI 60 to confirm a correct association of the detected cooking article A with the selected stored cooking article profile 82, when the controller 18 determines that the detectable characteristic corresponds with that of the stored cooking article profile 82. Additionally, the controller 18 may prompt the user to provide an information entry (including the above described name, image selection, or the like) regarding the detected cooking article A for the creation of the new stored profile 82 to be associated with the detected cooking article A, when the controller 18 determines that the detectable characteristic does not correspond with those of any of the stored cooking article profiles 82 in memory 62. The controller 18 may use a predetermined information entry, such as a generic or placeholder entry for the new profile 82 either after the user declines to enter the information regarding the detected cooking article A or after the completion of a timeout interval (e.g. 30 seconds). Further, different colors or other indicators can be used in connection with the cooking articles A that have not been calibrated and/or do not have a profile 82 associated therewith.

During operation, the controller 18 can retrieve the information regarding the one or more detectable characteristics of the detected cooking articles A for use in controlling the inductive heating of the cooking articles A according to the user settings. In various aspects any of the cooking article size, cooking article shape, cooking article type, induction heating calibration profile, cooking article material composition, thermal absorption profile, and acoustic profile can be used to derive, for example the specific driving signal used by the controller 18 during heating of the cooking articles A by the selected corresponding power delivery coils 14. The controller 18 may, for example, heat one of the detected cooking articles A to a first heating level by inductive coupling with at one of the plurality of power delivery coils 14 by deriving a driving signal for the one of the power delivery coils 14 using the at least one measureable characteristic of the retrieved profile 82 associated with the cooking article A selected for control by the user to achieve the selected temperature.

As discussed above, the signal 20 received from the detector 16 can also include position information for the selected one of the detected cooking articles A. The controller 18 can, accordingly, select the at least one of the plurality of power delivery coils 14 for use in heating the cooking article A based on the position information to correspond with the detected location 22 of the cooking article A along the cooktop surface 12. As discussed above with respect to FIGS. 13 and 14, the controller 18 may continue to receive the signal 20 from the detector 16 and may determine, based on for example the information in the signal 20 associated with the at least one detectable characteristic, that the subsequent position information indicates that a particular cooking article A is moved to a new location along the cooktop surface 12, as discussed above. The controller 18 can, accordingly, continue to heat the moved cooking article A' at the corresponding, user-selected heating level using the corresponding power delivery coil(s) 14 in the new location.

In any such variation, the cooktop 10 can, further, be configured to detect non-cooking items on the cooktop 10 using the detectable characteristic information included in the signal 20 and to lockout the associated zone or induction coils and/or alert the user, accordingly, as discussed further above.

In a further aspect of the disclosure, a method 110 for controlling the induction cooktop 10, shown schematically in FIG. 15, includes receiving the signal 20 from the cooking article detector 16, according to the various aspects discussed above (step 112). As discussed the signal 20 includes size and position information for at least one detected cooking article A on the cooktop surface 12 of the induction cooktop 10. In one aspect, the method 110 can include a position guidance operation 112 in which the information in the signal 20 is used to determine whether the detected position 22 of the detected cooking article A correlates with the preferred position 24 of the cooking article A with respect to at least one of the plurality of power delivery coils 14 beneath the cooktop surface 12 (step 114). If the detected position 22 does not correspond with the preferred position 24, an indication 68 of the preferred position 24 is presented to the user (step 116), via a light source (such as lighting elements 64 or projector 76, as discussed above) directed toward the cooktop surface 12 on at least one of the detected cooking article A and the cooktop surface 12, as discussed further above with respect to FIGS. 2, 4, and 10, for example.

In a further aspect of the method 110, information regarding at least one detectable characteristic of the cooking article A included in the signal 20 can be used to associate the at least one measureable characteristic of the first cooking article A1 with a profile 82 for the first cooking article A1 stored in memory 32 (step 118). In particular, the profile retrieval process (step 118) can include comparing the measurable characteristic information regarding the measureable characteristic associated with stored profiles 82 for cooking articles A in memory 32 (step 220) and retrieving the profile information 86,88 associated with a profile associated with the cooking article A based on a match in measureable characteristic information (step 122). If the information for the detected cooking article A does not match any existing profiles 82, the user is prompted to enter information for use in the creation of a new profile 82 associated with the cooking article A (step 124).

After the retrieval or entry of a cooking profile, or directly after appropriate positioning of the cooking article (step 114), the cooking article A is heated using at least one of the plurality of power delivery coils 14, which may be selected using the position information obtained in step 112 (step 126). In one aspect, the heating may be accomplished by driving the power delivery coil(s) 14 with a driving signal derived according to the at least one measureable characteristic associated with the profile 82 obtained (step 122) or entered (step 124) in the profile retrieval step (118).

In an additional or alternative step, the method 110 can further include monitoring for a change in position of the cooking article A (step 128). In particular, the monitoring can include continuing to receive the signal 20 from the detector 16, including subsequent size and position information (step 130). It can then be determined, based at least on the subsequent size information, that the subsequent position information indicates that the first detected cooking article A1 is moved to a new position correlating with the subsequent position information (step 132), as discussed further above with respect to FIGS. 13 and 14. If movement is detected, the method 110 can include continuing to heat the detected cooking article A at the same heating level previously used by inductive coupling with different power delivery coil(s) 14 that correspond with the new position information (step 134). If the position information indicates a subsequent detection of a cooking article A, but not that a prior-detected cooking article A has been moved, it can be determined that a new cooking article A has been placed on the cooktop surface 12 and the method 110 can proceed according to the particular configuration for operation, as discussed above. Various aspects of the method and optional variations thereof can be further implemented in additional combinations according to the combinations of functions discussed above.

The invention disclosed herein is further summarized in the following paragraphs and is further characterized by combinations of any and all of the various aspects described therein.

According to another aspect of the present disclosure, an induction cooktop includes a cooktop surface, a plurality of power delivery coils in an array beneath the cooktop surface, a cooking article detector, a light source directed toward the cooktop surface, and a controller. The controller receives a signal from the cooking article detector including size and position information for at least one detected cooking article on the cooktop surface and determines that a detected position of the detected cooking article does not correlate with a preferred position of the cooking article with respect to at least one of the plurality of power delivery coils. The controller then presents an indication, preferably via the light source, of the preferred position of the detected cooking article on at least one of the detected cooking article and the cooktop surface.

The light source can be an array of light elements in an array beneath the cooktop surface, and the controller may present the indication of the preferred position of the detected cooking article on an underside of the cooktop surface so as to be visible through the cooktop surface by illuminating selected ones of the light elements correlating with a desired shape of the indication within the preferred position of the detected cooking article.

The light source can be a projector positioned above the cooktop surface and directed toward an outside of the cooktop surface, and the controller can present the indication of the preferred position of the detected cooking article on the at least one of the detected cooking article and the cooktop surface by projecting an image of the indication within the preferred position of the detected cooking article.

The indication of the preferred position of the detected cooking article can be configured to represent a preferred center of the detected cooking article.

The indication of the preferred position of the detected cooking article can include a representation of a direction of movement for the detected cooking article into the preferred position.

The controller may further present an indication, via the light source, of a detected position of the cooking article.

The controller may further determine that the detected position of the detected cooking article correlates with the preferred position of the cooking article and presents a confirmation notification, via the light source, on the at least one of the detected cooking article and the cooktop surface.

The controller may determine that the detected position of the cooking article does not correlate with the preferred position of the cooking article during a calibration process wherein the controller determines an inductance of the at least one of the plurality of power delivery coils when inductively coupled with the detected cooking article.

The controller may determine that the detected position of the cooking article does not correlate with the preferred position of the cooking article during a calibration process by the inductance of the at least one of the plurality of power delivery coils when inductively coupled with the detected cooking article being below a predetermined threshold and may determine the preferred position of the cooking article to increase the inductance of the at least one of the plurality of power delivery coils to above the predetermined threshold.

The cooking article detector can be a multi-touch detector operably associated with the cooktop surface.

The multi-touch detector can include a camera directed toward the cooktop surface and transmitting the signal in the form of an image data to the controller, and the controller can receive the signal and may apply an image processing routine on the image data to extract from the image data the size and position information for the at least one detected cooking article on the cooktop surface.

The induction cooktop can further include a light source positioned beneath the cooktop surface, the camera can be positioned beneath the cooktop surface, and the image processing routine can be configured to extract from the image data the size and position information for the at least one detected cooking article on the cooktop surface based on an identification of contact between the detected cooking article and the cooktop surface using one of rear diffused illumination, or diffused surface illumination techniques.

The light source can be an infrared light source and the camera can be configured to capture infrared light for transmission in the image data.

The induction cooktop can further include a light source disposed above the cooktop surface, the camera can be positioned beneath the cooktop surface, and the image processing routine is configured to extract, from the image data, the size and position information for the at least one detected cooking article on the cooktop surface based on an identification of contact between the detected cooking article and the cooktop surface using one of front diffused illumination, laser light plane, or light emitting diode plane techniques.

The light source can include a plurality of infrared lasers disposed in a frame surrounding the cooktop surface and projecting respective infrared pulses across an outside of the cooktop surface, the cooktop surface can include a diffuser layer along an inside thereof, the camera can be configured to capture infrared light illuminating the diffuser layer by reflection of at least one infrared pulse from the at least one detected cooking article, and the image processing routine is configured to extract from the image data the size and position information for the at least one detected cooking article on the cooktop surface in combination with a time-of flight data from at least one of the infrared lasers according to the laser light plane technique.

The multi-touch detector can include first and second pluralities of light emitters on respective first and second adjacent sides of the cooktop and first and second pluralities of light detectors on respective third and fourth sides respectively opposite the first and second pluralities of light emitters and the controller may receive the signal from the cooking article detector in the form of light detection data from the first and second pluralities of light detectors and may derive the size and position information for the at least one detected cooking article on the cooktop surface based on the light detection data.

The first and second pluralities of light emitters can be light sources positioned above and directed across the cooktop surface and the controller may derive the size and position information for the at least one detected cooking article on the cooktop surface based on the light detection data indicating light being blocked by the at least one detected cooking article.

The first and second pluralities of light emitters can be light sources directed into the cooktop surface at the first and second sides thereof, respectively and the controller may derive the size and position information for the at least one detected cooking article on the cooktop surface based on the light detection data indicating frustrated total internal reflection from the detected cooking article.

The cooking article detector may comprise a plurality of acoustic sensors coupled with an underside of the cooktop surface, and the controller may derive the size and position information for the at least one detected cooking article on the cooktop surface based on a time differential of a sound event among at least three of the plurality of acoustic sensors and identified in the signal.

The cooking article detector may comprise a plurality of load cells supporting respective corners of the cooktop surface, and the controller may derive the size and position information for the at least one detected cooking article on the cooktop surface based on a distribution of a load change on the cooktop identified in the signal.

The controller, in receiving the signal from the cooking article detector, may determine that the size and position data indicates that the at least one detected cooking article is placed on the cooktop surface and may continue receiving the signal from the cooking article detector including subsequent size and position information and may determine, based at least on the size information, that the subsequent position information indicates that the at least one detected cooking article is moved to a new position correlating with the subsequent position information.

The controller may further present an indication, via the light source, of a new detected position of the cooking article.

The controller may determine that a new detected position of the detected cooking article does not correlate with a new preferred position of the cooking article with respect to another of the plurality of power delivery coils and may present an indication, via the light source, of the new preferred position of the detected cooking article on at least one of the detected cooking article and the cooktop surface.

The controller, based at least on the size information for the at least one detected cooking article on the cooktop surface, may identify the detected cooking article as a profiled cooking article having at least one cooking parameter of the profiled cooking article stored in a memory accessible by the controller.

According to yet another aspect, an induction cooktop includes a cooktop surface, a plurality of power delivery coils in an array beneath the cooktop surface, a detector operably associated with the cooktop surface, and a controller. The controller receives a signal from the detector including size and position information for at least one detected object on the cooktop surface, determines that the size and position data indicates that the at least one detected object is a first detected cooking article placed on the cooktop surface, and heats the first detected cooking article to a first heating level by inductive coupling with at least a first one of the plurality of power delivery coils corresponding with the position information associated with the first detected cooking article. The controller then continues to receive the signal from the detector, including subsequent size and position information, determines, based at least on the subsequent size information, that the subsequent position information indicates that the first detected cooking article is moved to a new position correlating with the subsequent position information and continues to heat the first detected cooking article at the first heating level by inductive coupling with at least a second one of the plurality of power delivery coils corresponding with the new position information.

The controller, based at least on the size information for the first detected cooking article on the cooktop surface, may identify the first detected cooking article as a first profiled cooking article having at least one cooking parameter of the first profiled cooking article stored in a memory accessible by the controller.

The at least one cooking parameter of the first profiled cooking article can include at least one of a cooking article size, a cooking article shape, a cooking article type, an induction heating calibration profile, a cooking article material composition, a thermal absorption profile, and an acoustic profile.

The controller, in continuing to heat the first detected cooking article at the first heating level by inductive coupling with at least the second one of the plurality of power delivery coils, may derive a driving signal for the second one of the power delivery coils using the at least one cooking parameter of the first profiled cooking article.

The detector can be a multi-touch detector operably associated with the cooktop surface. In this respect, the multi-touch detector may be as further specified in ¶¶ [0073]-[0082], above.

The detector can comprise plurality of acoustic sensors coupled with an underside of the cooktop surface, and the controller may derive the size and position information for the first detected cooking article on the cooktop surface based on a time differential of a sound event among at least three of the plurality of acoustic sensors and identified in the signal.

The induction cooktop can further include a light source directed toward the cooktop surface, and the controller may further determine that the position data associated with the first detected cooking article does not correlate with a preferred position of the cooking article with respect to at least the first one of the plurality of power delivery coils and may, accordingly, present an indication, via the light source, of the preferred position of the first detected cooking article on at least one of the first detected cooking article and the cooktop surface.

The controller may further present an indication, via the light source, of a new detected position of the first detected cooking article.

The controller may determine that the new position of the first detected cooking article does not correlate with a new preferred position of the first detected cooking article with respect to the second of the plurality of power delivery coils and may, accordingly, present an indication, via the light source, of the new preferred position of the first detected cooking article on at least one of the detected cooking article and the cooktop surface.

The controller may further determine that the size and position data indicates that the at least one detected object further includes a second detected cooking article placed on the cooktop surface and may heat the second detected cooking article to a second heating level by inductive coupling with at least a third one of the plurality of power delivery coils corresponding with the position information associated with the second detected cooking article.

The controller may further continue to receive the signal from the detector including subsequent size and position information, may determine, based at least on the size information, that the subsequent position information indicates that the second detected cooking article is moved to a second new position correlating with the subsequent position information associated with the second detected cooking article, and may continue to heat the second detected cooking article at the second heating level by inductive coupling with at least a fourth one of the plurality of power delivery coils corresponding with the second new position information.

The controller may not determine that the size and position data indicates that the at least one detected object is the first detected cooking article placed on the cooktop surface and may, accordingly, alert the user that the at least one detected object is a non-cooking object.

According to yet another aspect, an induction cooktop includes a cooktop surface, a plurality of power delivery coils in an array beneath the cooktop surface, a detector operably associated with the cooktop surface, and a controller. The controller receives a signal from the detector including information associated with at least one detectable characteristic of a first cooking article positioned on the cooktop surface and associates the at least one measureable characteristic of the first cooking article with a first profile associated with the first cooking article stored in a memory accessible by the controller.

The detector can be an input included in the controller and operably associated with the cooktop surface by receiving a return signal from at least one of the plurality of power delivery coils when coupled with the first cooking article through the cooktop surface and driven by the controller according to a first calibration signal. The return signal can include the information associated with the at least one measureable characteristic of the first cooking article. The at least one measureable characteristic of the first cooking article can include at least one of an induction heating calibration profile, a cooking article material composition, and a thermal absorption profile.

The detector can further include a first temperature sensor directed toward the cooktop surface and adjacent the at least one of the plurality of power delivery coils, and the signal from the detector can further include temperature information from the first temperature sensor for determining at least one of the induction heating calibration profile and the thermal absorption profile.

The detector can comprise a plurality of acoustic sensors coupled with an underside of the cooktop surface, and the information associated with at least one detectable characteristic of the first cooking article positioned on the cooktop surface can include an acoustic profile associated with the first cooking article.

The controller may further derive the position information for the first detected cooking article on the cooktop surface based on a time differential of a sound event among at least three of the plurality of acoustic sensors and identified in the signal.

The detector can be a multi-touch detector operably associated with the cooktop surface, and the least one detectable characteristic of the first cooking article positioned on the cooktop surface may include at least one of a cooking article size and a cooking article shape, as determined by the signal received from the multi-touch detector. In this respect, the multi-touch detector may be as further specified in ¶¶ [0073]-[0082], above.

The detector can include an image sensor capturing image data from a field of view including the cooktop surface and outputting the image data in the signal, and the least one detectable characteristic of the first cooking article positioned on the cooktop surface can include at least one of a cooking article size, a cooking article shape, and a cooking article type, as determined by the image data in the signal received from the image sensor.

The controller may associate the at least one measureable characteristic of the first cooking article in the first profile associated with the first cooking article by comparing the at least one measureable characteristic of the first cooking article with a plurality of stored cooking article profiles stored in the memory and one of determining that the detectable characteristic corresponds with one of the plurality of stored cooking article profiles and associates the first cooking article with the one of the plurality of stored cooking profiles or determining that the detectable characteristic does not correspond with any of the plurality of stored cooking article profiles and associates the first cooking article with the a new stored cooking profile added to the memory.

The induction cooktop may further include a user interface in electronic communication with the controller, and the controller may prompt a user to confirm a correct association of the first cooking article with one of the plurality of stored cooking profiles, when the controller determines that the detectable characteristic corresponds with one of the plurality of stored cooking article profiles, and may prompt the user to provide an information entry regarding the first cooking article for an additional association with the new stored cooking profile, when the controller determines that the detectable characteristic does not correspond with any of the plurality of stored cooking article profiles.

The controller, after prompting the user to provide the information entry regarding the first cooking article, may use a predetermined information entry with the additional association with the new stored cooking profile after the user declines to enter the information entry regarding the first cooking article or the completion of a timeout interval.

The at least one measureable characteristic of the first cooking article can include at least one of a cooking article size, a cooking article shape, a cooking article type, an induction heating calibration profile, a cooking article material composition, a thermal absorption profile, and an acoustic profile, and the controller may further heat the first cooking article to a first heating level by inductive coupling with at least a first one of the plurality of power delivery coils, the controller deriving a driving signal for the first one of the power delivery coils using the at least one measureable characteristic of the first profile.

The signal received from the detector can further include position information for the first cooking article, and the controller may select the first one of the plurality of power delivery coils based on the position information to correspond with a first location of the first cooking article along the cooktop surface and may further continue to receive the signal from the detector including position of the first cooking article, and may determine, based on the information associated with the at least one detectable characteristic, that the subsequent position information indicates that the first cooking article is moved to a second location, and may continue to heat the first detected cooking article at the first heating level by inductive coupling with at least a second one of the plurality of power delivery coils corresponding with the second location.

The controller may not determine that the size and position data indicates that the at least one detected object is the first detected cooking article placed on the cooktop surface and may, accordingly, alert the user that the at least one detected object is a non-cooking object.

According to yet another aspect, an induction cooktop includes a cooktop surface, a plurality of power delivery coils in an array beneath the cooktop surface, a detector operably associated with the cooktop surface, and a controller receiving a signal from the detector including information associated with at least one detectable characteristic of a first cooking article positioned on the cooktop surface. When receiving the signal, the controller either determines that the at least one measureable characteristic indicates that the at least one detected object is a first detected cooking article placed on the cooktop surface and heats the first detected cooking article to a first heating level by inductive coupling with at least a first one of the plurality of power delivery coils or determines that the at least one measureable characteristic indicates that the at least one detected object is a non-cooking article placed on the cooktop surface and alerts the user to detection of the non-cooking object on the cooktop surface.

According to yet another aspect, an induction cooktop includes a cooktop surface, a plurality of power delivery coils in an array beneath the cooktop surface, a user interface, a cooking article detector, and a controller. The controller receives a signal from the cooking article detector including size and position information for at least one detected cooking article on the cooktop surface, determines that a detected position of the detected cooking article does not correlate with a preferred position of the cooking article with respect to at least one of the plurality of power delivery coils during a calibration process, wherein the controller determines an inductance of the at least one of the plurality of power delivery coils when inductively coupled with the detected cooking article, by the inductance of the at least one of the plurality of power delivery coils, when inductively coupled with the detected cooking article, being below a predetermined threshold. The controller then presents an indication, via the user interface, of the preferred position of the detected cooking article. The preferred position is determined to increase the inductance of the at least one of the plurality of power delivery coils to above the predetermined threshold.

According to yet another aspect, a method for controlling induction cooktop includes receiving a signal from a cooking article detector, the signal including size and position information for at least one detected cooking article on a cooktop surface of the induction cooktop, determining that a detected position of the detected cooking article does not correlate with a preferred position of the cooking article with respect to at least one of a plurality of power delivery coils in an array beneath the cooktop surface, and presenting an indication, via a light source directed toward the cooktop surface, of the preferred position of the detected cooking article on at least one of the detected cooking article and the cooktop surface.

According to yet another aspect, a method for controlling an induction cooktop includes receiving a signal from a detector operably associated with a cooktop surface of the induction cooktop. The signal includes size and position information for at least one detected object on the cooktop surface. The method further includes determining that the size and position data indicates that the at least one detected object is a first detected cooking article placed on the cooktop surface and heating the first detected cooking article to a first heating level by inductive coupling with at least a first one of a plurality of power delivery coils in an array beneath the cooktop surface. The first one of the plurality of power delivery coils corresponds with the position information associated with the first detected cooking article. The method further includes continuing to receive the signal from the detector, including subsequent size and position information, and determining, based at least on the subsequent size information, that the subsequent position information indicates that the first detected cooking article is moved to a new position correlating with the subsequent position information and continuing to heat the first detected cooking article at the first heating level by inductive coupling with at least a second one of the plurality of power delivery coils corresponding with the new position information.

According to yet another aspect, a method for controlling an induction cooktop includes receiving a signal from a detector operably associated with a cooktop surface. The signal includes information associated with at least one detectable characteristic of a first cooking article positioned on the cooktop surface. The method further includes associating the at least one measureable characteristic of the first cooking article in a first profile associated with the first cooking article and heating the first cooking article using at least a first one of a plurality of power delivery coils in an array beneath the cooktop surface by driving at least a first one of the plurality of power delivery coils with a driving signal derived according to the at least one measureable characteristic.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. An induction cooktop (10), comprising:
a cooktop surface (12);
a plurality of power delivery coils (14) in an array (62) beneath the cooktop surface (12);
a cooking article detector (16);
a light source (26) directed toward the cooktop surface (12); and
a controller (18):
receiving a signal (20) from the cooking article detector (16) including size and position information for at least one detected cooking article on the cooktop surface (12);
determining that a detected position (22) of the detected cooking article does not correlate with a preferred position (24) of the detected cooking article with respect to at least one of the plurality of power delivery coils (14); and
presenting an indication (28), preferably via the light source (26), of the preferred position (24) of the detected cooking article on at least one of the detected cooking article and the cooktop surface (12) from above or below.

2. The induction cooktop (10) of claim 1, wherein:
the light source (26) is a plurality of light elements (64) in an array (62) beneath the cooktop surface (12); and
the controller (18) presents the indication (28) of the preferred position (24) of the detected cooking article on an underside of the cooktop surface (12) so as to be visible through the cooktop surface (12) by illuminating selected ones of the light elements (64) correlating with a desired shape of the indication (68) within the preferred position (24) of the detected cooking article.

3. The induction cooktop (10) of claim 1, wherein:
the light source (26) is a projector (76) positioned above the cooktop surface (12) and directed toward an outside (78) of the cooktop surface (12); and
the controller (18) presents the indication (28) of the preferred position (24) of the detected cooking article on the at least one of the detected cooking article and the cooktop surface (12) by projecting an image of the indication (28) within the preferred position (24) of the detected cooking article.

4. The induction cooktop (10) of any one of the preceding claims, wherein the indication (28) of the preferred position (24) of the detected cooking article is configured to represent a preferred center of the detected cooking article.

5. The induction cooktop (10) of any one of the preceding claims, wherein the indication (28) of the preferred position (24) of the detected cooking article includes a representation of a direction of movement for the detected cooking article into the preferred position (24).

6. The induction cooktop (10) of any one of the preceding claims, wherein the controller (18) further presents an indication (28), via the light source (26), of the detected position (22) of the cooking article.

7. The induction cooktop (10) of any one of the preceding claims, wherein the controller (18) further detects that the detected position (22) of the detected cooking article correlates with the preferred position (24) of the cooking article and presents a confirmation notification, via the light source (26), on the at least one of the detected cooking article and the cooktop surface (12).

8. The induction cooktop (10) of any one of the preceding claims, wherein the controller (18) determines that the detected position (22) of the cooking article does not correlate with the preferred position (24) of the cooking article during a calibration process wherein the controller (18) determines an inductance of the at least one of the plurality of power delivery coils (14) when inductively coupled with the detected cooking article.

9. The induction cooktop (10) of claim 8, wherein:
the controller (18) determines that the detected position (22) of the cooking article does not correlate with the preferred position (24) of the cooking article during the calibration process by the inductance of the at least one of the plurality of power delivery coils (14) when inductively coupled with the detected cooking article being below a predetermined threshold; and
the controller (18) determines the preferred position (24) of the cooking article to increase the inductance of the at least one of the plurality of power delivery coils (14) to above the predetermined threshold.

10. The induction cooktop (10) of any one of the preceding claims, wherein the cooking article detector (16) is a multi-touch detector (16) operably associated with the cooktop surface (12).

11. The induction cooktop (10) of claim 10, wherein:
the multi-touch detector (16) includes a camera (34) directed toward the cooktop surface (12) and transmits the signal (20) in the form of an image data to the controller (18); and
the controller (18) receives the signal (20) and applies an image processing routine on the image data to extract from the image data the size and position information for the at least one detected cooking article on the cooktop surface (12).

12. The induction cooktop (10) of any one of the preceding claims, wherein the controller (18):
receiving the signal (20) from the cooking article detector (16), determines that the size and position data indicates that the at least one detected cooking article is placed on the cooktop surface (12); and
continues receiving the signal (20) from the cooking article detector (16) including subsequent size and position information and determines, based at least on the size information, that the subsequent position information indicates that the at least one detected cooking article is moved to a new position correlating with the subsequent position information.

13. The induction cooktop (10) of claim 12, wherein the controller (18) further presents an indication (28), via the light source (26), of a new detected position (22) of the cooking article.

14. The induction cooktop (10) of claim 12, wherein the controller (18):
determines that a new detected position (22) of the detected cooking article does not correlate with a new preferred position (24) of the cooking article with respect to another of the plurality of power delivery coils (14); and
presents an indication (28), via the light source (26), of the new preferred position (24) of the detected cooking article on at least one of the detected cooking article and the cooktop surface (12).

15. The induction cooktop (10) of any one of the preceding claims, wherein the controller (18), based at least on the size information for the at least one detected cooking article on the cooktop surface (12) identifies the detected cooking article as a profiled cooking article having at least one cooking parameter of the profiled cooking article stored in a memory (32) accessible by the controller (18).
